# EUROPEAN PATENT APPLICATION

(11) **EP 2 742 900 A1**
(43) Date of publication of application: **18.06.2014**
(21) Application number: 12197507.2
(22) Date of filing: 17.12.2012
(51) Int. Cl.: A61C 5/06

(54) **A device for dispensing a dental substance**

(71) Applicant: 3M Innovative Properties Company, Saint Paul, MN 55133-3427 (US)
(72) Inventor: The designation of the inventor has not yet been filed
(74) Representative: Hohmann, Arno

(57) **Abstract**

A device for dispensing a dental substance comprises a chamber for the dental substance, a dispensing receptacle, and a dispensing outlet. The dispensing receptacle is shaped to define a predetermined volume capacity between the dispensing outlet and an opening of the receptacle. Thus the receptacle is adapted to receive a predetermined portion of the dental substance dispensed from the dispensing outlet. The device further is adapted such that for dispensing the portion of the dental substance the chamber is reducible in volume. The device may facilitate metering and dispensing of dental substances.

## Description

### Field of the Invention

The invention relates to a device for dispensing a dental substance, and in particular to a device comprising a dispensing receptacle being adapted for dispensing a predetermined portion of the dental substance.

### Background Art

A variety of dental substances are provided in packages which do not only allow for storing the substances but further enable the substances to be dispensed directly from the package. In particular dental impression materials are often provided in containers or bags which can be used in a motor powered device to dispense and mix portions of material from those. However for some applications it is desired to manually use and mix dental substances, and therefore some dental substances are provided in manually operable packages, like tubes or jars, for example.

Although such manually operable packages are available there is a need in dentistry to prepare dental substances at a relatively short time even in a situation in which a manual preparation is preferred. Further it is desirable to provide a package which is easy to use and which is relatively inexpensive.

### Summary of the Invention

In a first aspect the invention relates to a device for dispensing a dental substance, which comprises a chamber for containing the dental substance, a dispensing receptacle for presenting the dental substance to a user, and a dispensing outlet for the chamber opening into the dispensing receptacle. The dispensing receptacle is shaped to define a predetermined volume capacity between the dispensing outlet and an opening of the receptacle. Thus the receptacle is adapted to receive or meter a predetermined portion of the dental substance dispensed from the dispensing outlet. The device further is adapted such that for dispensing the portion of the dental substance the chamber is reducible in volume.

The invention is advantageous in that it preferably allows for a predetermined portion of dental substance available to a user. The invention further may help metering a desired amount of the dental substance. The invention may further be advantageous in that it may help minimizing time for preparation of a dental substance before use. The invention further may provide for a device which is easy to use, and that is relatively inexpensive.

In one embodiment the chamber is reducible in volume by relative movement of two different parts of the device relative to each other. Such relative movement may predominantly include sliding of the two parts relative to each other and less dominantly deformation of any of the parts.

In a further embodiment the device comprises an audible indicator which is adapted to indicate a relative movement of parts for dispensing the dental substance. For example the device may be adapted to provide an audible click upon dispensation of each predetermined portion of the dental material. Such an indicator may be provided for example by a ratchet mechanism. The ratchet mechanism may for example comprise one or more recesses and a pawl which is arranged for snapping into the recess(es) at certain positions of the pawl and the recess(es) relative to each other, and by each snapping action the ratchet provides a click. Further the device may have an optical indicator for indicating relative movement of parts and thereby for indicating the amount of a portion of the dental material being dispensed.

In one embodiment the receptacle has an inner surface which concavely widens from the dispensing outlet toward the receptacle opening. The receptacle opening is preferably larger in cross-section than the dispensing outlet. Thus the dental substance dispensed may be easily accessible and/or removable by a user.

In a further embodiment the device comprises means for limiting an amount of dental substance dispensed within the predetermined volume capacity (or within the receptacle). Such means may for example include a mixing pad or a cap. For example the end of the receptacle which comprises the receptacle opening may extend generally planar so that the mixing pad can be used to close the receptacle opening during dispensation of dental substance. However any other generally flat structure, for example a table surface, may likewise be used in combination with the device. The so closed receptacle may be entirely filled with dental substance by dispensing the substance from the chamber. Any attempted overfilling of the receptacle may be recognizable by a user due to an increase of the force for further dispensation and/or from the mixing pad (or other structure) displacing from the receptacle. Thus the device enables for limiting the amount of dental substance dispensed to the predetermined volume capacity.

In one embodiment the device comprises a closure for closing the opening of the receptacle. Further the device may instead or in addition comprise a cutter for cutting off excess dental substance extending outside the receptacle, in particular dental substance protruding outside the receptacle beyond the receptacle opening.

In a further embodiment the device comprises a container which forms at least part of the chamber. The device further preferably comprises an actuator and a screw mechanism. The device thus is preferably adapted such that twisting of the actuator and the container relative to each other causes operating the screw mechanism. Further operating of the screw mechanism preferably also causes the chamber volume to reduce.

In one embodiment the device comprises a plunger receivable or received within the container. The plunger preferably has a first thread forming part of the screw mechanism. In this embodiment the actuator may be provided at the plunger, for example may be part of the plunger.

The container may have a second thread optionally forming a further part of the screw mechanism. Accordingly the container and the plunger may be adapted such that they can be telescopically screwed into each other.

Instead of a thread the plunger may have a plurality of bulges axially distributed along at least part of the plunger and the container may have at least one bulge for engaging between two bulges of the plunger. The device may be adapted such that the bulges of the plunger can snap past the bulge of the container upon exceeding a minimum force of urging the plunger and the container axially toward each other. Preferably the bulges are uniformly distributed along at least part of the plunger at a space which is selected such that snapping past each bulge of the plunger causes dispensing of a predetermined amount of dental material.

In an embodiment the container is part of a jar. The jar may further comprise a screw cap for closing the jar. The device may be adapted such that the plunger and the screw cap are alternatively engageable with the container via the second thread. For example the jar may be available including the container and with the screw cap screwed on the container for storing the dental substance. For dispensing dental substance the screw cap may be removed from the container and the plunger may be screwed on the container instead. This enables the use of the invention with a standard jar as they are used in dentistry for providing components of a dental putty impression material.

The second thread in this embodiment is preferably an outer thread. Accordingly the plunger preferably forms the first thread as inner thread for engaging with the second thread. Further the plunger may form the dispensing receptacle. The plunger may for example have a portion which comprises the dispensing receptacle and the dispensing outlet may be adapted to connect the chamber in the container with the dispensing outlet for fluid communication. Thus the plunger and the container may be screwed relative to each other and thereby dental substance is preferably dispensed toward the dispensing receptacle.

In an alternative embodiment the second thread is an inner thread and the plunger forms the first thread as outer thread for engaging with the second thread. The plunger in this embodiment may comprise the actuator. The plunger may further be received or receivable with the container. The plunger may be dimensioned such that the actuator is located outside the container at a position at which the chamber volume is essentially zero. Thus a user may easily recognize the amount of dental substance still present in the container. In an alternative the plunger may be dimensioned such that the actuator is located inside the container at essentially any position. Such an embodiment may be relatively compact in its dimensions.

In a further embodiment the device comprises a further screw cap for screwing on the second thread of the container. Such further screw cap preferably forms a third thread for engaging with the first thread of the plunger. In this embodiment the plunger may comprise the dispensing outlet.

In a further embodiment the device comprises a spindle and a piston. The spindle and the piston are preferably in screwed connection with each other such that a relative rotation of the spindle and the piston to each other causes a linear displacement of the spindle and the piston to each other. The spindle is preferably received axially stationary but rotatably within the container and the piston is preferably received axially displaceable but anti-twist retained within the container. The actuator may be connected with the spindle. Therefore a user may rotate the spindle by rotating the actuator and thereby cause the piston to displace linearly within the container. The piston is preferably anti-twist retained only by friction with the container.

In a further embodiment the device has a generally rotationally symmetric shape with the outlet extending parallel and in an off-center relationship to the symmetry axis. Further the device, for example the container, may form a second actuator, for example may have an outer surface for grasping by a user. Preferably such an outer grasping surface is generally cylindrical and has a diameter of between about 50 mm and about 80 mm, preferably about 55 mm. It has been found that a container having a grasping surface within these dimensions can be handled relatively conveniently by different users.

In a further embodiment the chamber has a first diameter and the dispensing outlet has a second diameter, wherein the second diameter is smaller than the first diameter. Preferred embodiments of the device comprise first and second diameters at a ratio of 0.5, 0.4, or 0.3, preferably based on the smaller second diameter being 25 mm, 20 mm or 15 mm, respectively.

In a second aspect the invention relates to a device for dispensing a dental substance, which comprises a chamber for containing the dental substance, and a dispensing outlet for the chamber. The device further is adapted such that for dispensing the portion of the dental substance the chamber is reducible in volume.

The additional features disclosed as embodiments of the first aspect may be used in combination with this second aspect of the invention.

In one embodiment of the second aspect the device comprises an outlet tube. Further the device may comprise a closure for closing the dispensing outlet of the outlet tube. The device may instead or in addition of a closure comprise a cutter for cutting off excess dental substance extending outside the outlet tube, in particular dental substance protruding outside the outlet tube beyond the dispensing outlet. The outlet tube may extend generally linearly parallel to a longitudinal axis of the device toward a free end. The end face of the free end may extend generally planar in a plane which is non-perpendicular relative to the longitudinal axis, and preferably inclined relative to the longitudinal axis by between about 30 degrees and about 60 degrees, preferably by about 45° degrees. It has been found that thus a strand of dental substance may be conveniently cut off from the dispensing opening.

In one embodiment according to the first or second aspect of the invention the dental substance is one of at least two components A and B of a dental impression material. The component or both components may consist of condensation cured or addition cured silicones which exhibit a consistency which can be kneaded by hand. Thus the components can be merged or mixed by a user, for example a dentist or dental assistant, by hand kneading. The components are further preferably adapted such that they can be relatively homogeneously mixed. The so prepared mixed dental impression material may be filled in a dental impression tray and placed in a patient's mouth for making a dental impression. The prepared dental impression material may be substantially non-sticky, for example may not stick to the device of the invention, meaning that the prepared dental impression material may be removable from a surface of the device generally without leaving residues behind.

The dental substance contained in the device may therefore generally exhibit a consistency as it is described by ISO 4823 as kneadable or putty or type 0 consistency. ISO 4823 describes four different impression molding consistencies, namely a readily flowing consistency (type 3), a medium-flowing consistency (type 2), a poorly flowing consistency (type 1) and a kneadable consistency (type 0). For this purpose it is important that these type 0 materials do not stick to the fingers or gloves and/or leave residues behind. It is typical for these materials to have a high viscosity or consistency in the mixed paste which can be measured according to ISO 4823 and which shows a value of max. 35 mm. Such a high consistency can be achieved by using a high filler load or high viscous silicone polymers in the formulations of A and B.

The dental substance may further comprise isoparaffin or paraffin wax or microwax and/or liquid paraffin or liquid paraffin-coated fillers to them. This prevents the pastes sticking to the fingers. Materials of this nature are described, for example, in EP-A 0 219 660, EP-A 0 166 107, EP-A 0 158 141, EP-A 0 152 887 and US 7,186,758 B2.

Condensation cured silicones generally consist of a silicone oil based on a polydimethylsiloxane containing hydroxyl end groups and mixed with fillers and a curing component containing a metal salt, e.g. of a monocarboxylic acid and a silicic acid ester as a crosslinking component. Examples of metal compounds are Dibutyltindilaurate or Titaniumalkoxides.

Preferred are addition curing silicones containing at least one organopolysiloxane having at least two unsaturated groups in the molecule, at least one organohydrogenpolysiloxane having at least or more than two SiH-groups in the molecule, a platinum catalyst, fillers and additives like those described to reduce stickiness but also pigments, plasticizers, antioxidants or surfactants.

The type 0 (ISO 4823) materials can also be based on condensation or addition curing polyethers and polyethersilicones. They are available in two components A and B which are mixed in a volume ratio of typically 10:1 to 1:10, preferably 1:1.

The consistency of the dental impression material is preferably selected such that a strand of the component of at least 30 mm length and a diameter of about 15 mm (or alternatively about 20 mm or further alternatively about 25 mm) is self-supporting over a time of at least 60 seconds at room temperature of about 23 °C. In that regard "self-supporting" means that the strand positioned on a surface and oriented with its larger dimension generally vertical does not reduce in length by more than 10% over the time specified.

In a third aspect the invention relates to a kit comprising a device according to the first aspect of the invention and a further device according to the second aspect of the invention. Preferably the kit comprises in each of the devices a component of a dental substance which merged with each other form a hardenable dental material. The mixing ratio of these components may be within a range of 1 : 10 to 1 : 20. In the kit of the invention, preferably the smaller amount of dental substance is provided within the device of the second aspect of the invention and the greater amount is provided within the device of the first aspect of the invention.

### Brief Description of the Figures

- Fig. 1: is a cross-sectional view of a device for dispensing a dental substance according to an embodiment of the invention;
- Fig. 2: is a cross-sectional view of a device according to the background of the invention;
- Fig. 3: is a perspective partial cross-sectional view of a device for dispensing a dental substance according to another embodiment of the invention;
- Fig. 4: is a cross-sectional view of device for dispensing a dental substance according to a further embodiment of the invention;
- Fig. 5: is a cross-sectional view of a device for dispensing a dental substance according to a further embodiment of the invention;
- Fig. 6: is a cross-sectional view of a device for dispensing a dental substance according to a still further embodiment of the invention; and
- Fig. 7: is a cross-sectional view of a device for dispensing a dental substance according to a further embodiment of the invention.

### Detailed Description of the Invention

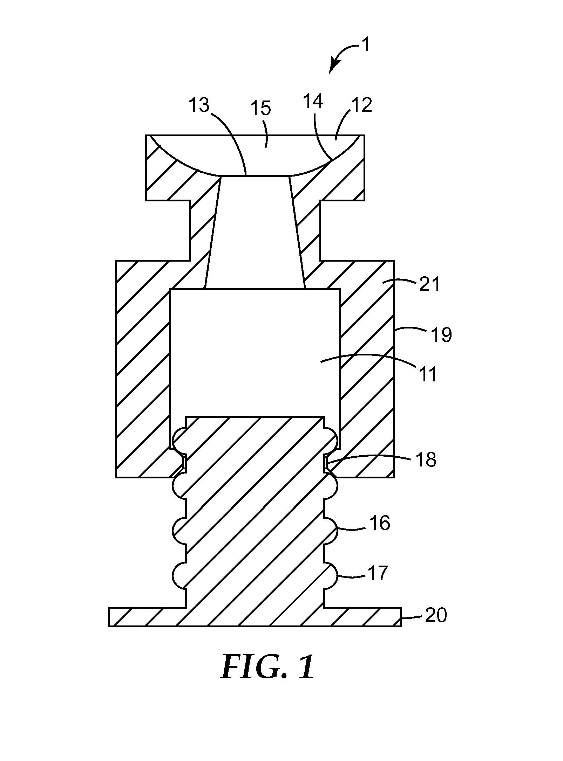

Fig. 1 shows a device 1 for dispensing a dental substance. The device 1 comprises a chamber 11 for containing the dental substance. The device 1 has further a dispensing receptacle 12. The receptacle 12 is configured for presenting the dental substance to a user, for example to make a portion of the dental substance easily accessible to a use. The device has a dispensing outlet 13 which is an opening of the chamber 11. The dispensing opening 13 opens into the receptacle 12. In the example shown the dispensing opening 13 is provided at a first end of an inner surface 14 of the receptacle 12. Further a receptacle opening 15 is formed at an opposite second end of the inner surface 14 of the receptacle 12. The inner surface of the receptacle concavely, and preferably smoothly, widens from the dispensing outlet toward the receptacle opening. The receptacle opening is larger in cross-section than the dispensing outlet. Preferably the receptacle opening is larger in cross-section, preferably the receptacle diameter is preferably 2 to 3 times larger than the diameter of the dispensing outlet 13. Thus the dental substance dispensed may be accessible easily by a user of the device 1.

The dispensing receptacle 12 is shaped to define a predetermined volume capacity formed between the dispensing outlet 13 and the receptacle opening 15. Thus the dispensing receptacle 12 is adapted to receive a predetermined portion of the dental substance dispensed from the dispensing outlet 13. In the example the device 1 has further a plunger 16 which is sealingly and displaceably received within the chamber 11 of the device 1 for reducing the chamber 11 in volume and thereby dispensing dental substance toward the receptacle 12. In the example shown the plunger 16 has - preferably annular - outer bulges 17 which engage with inner bulges 18 of a container 19. The plunger 16 further has a first actuator 20 and the container has a second actuator 21. In the example the first actuator 20 forms a stand for supporting the device on a surface, for example a table top. The second actuator 21 allows for urging the container 19 against the plunger 16 (latter being supported on a table top for example). The container 19 and the plunger 16 via the bulges 17, 18 are adapted such that they are movable relative to each other only upon urging the container 19 and the plunger 16 against each other above a certain minimum force. Upon exceeding that minimum force one of the bulges 17 preferably snaps past the bulge 18 and thereby a predetermined amount of dental substance is preferably dispensed. The snap function is preferably enabled by a certain elasticity of the container 19 and/or the plunger 16. For example urging of one of the bulges 17 past the bulge 18 may cause the container 19 and/or the plunger 16 to partly deform so that the bulges 17, 18 can move past one another.

The plunger 16 and the container 19 together may in another example (not shown) form a screw mechanism. The plunger 16 of such example may have a first actuator 20 and the container may have a second actuator 21 which are adapted for rotating the plunger 16 and the container 19 relative to each other. Therefore the device may be adapted such that twisting of the plunger 16 and the container 19 relative to each other, for example by a user, causes operating the screw mechanism and thereby the chamber volume to reduce. Accordingly the dental substance may be dispensed into the dispensing receptacle 12 by rotating the plunger 16 and the container 19 relative to each other.

In the example the container 19 also forms the receptacle 12. The container 19 is shaped such that the receptacle opening 15 extends substantially in a plane and further such that the container 19 at one end is substantially flush with that plane. Therefore the device 1 may be placed with the receptacle 12 down on a table surface (not shown) for providing a closed space between the inner surface14 and the table surface. That space may be entirely filled by dispensing dental substance into the receptacle 12 so that a portion of dental substance corresponding to the predetermined volume can be provided. The receptacle may instead by a table surface be covered for example a mixing pad, or any other appropriate flat structure.

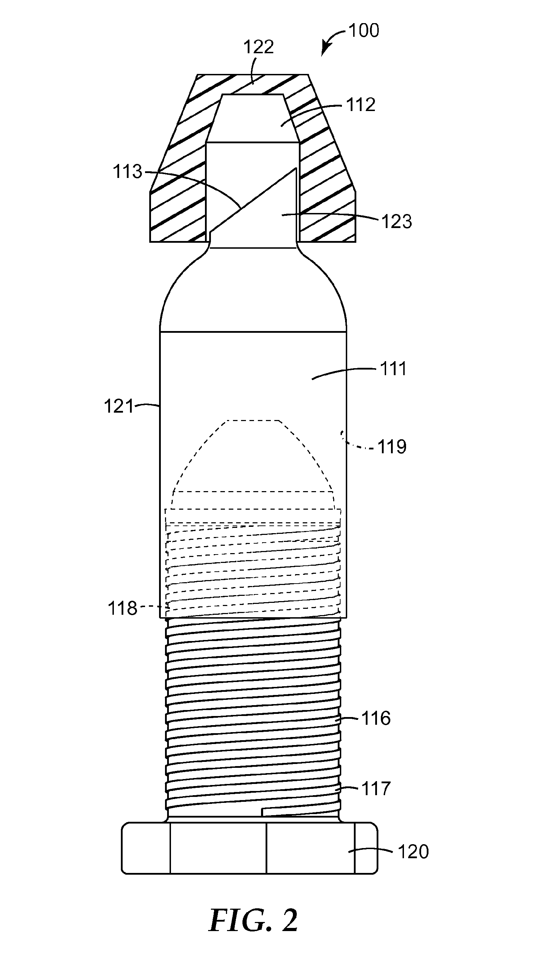

Fig. 2 shows a device 100 which is adapted for dispensing a dental substance. The device 100 comprises a chamber 111 for containing the dental substance. The device 100 has dispensing outlet 113 which is an opening of the chamber 111.

The device 100 has further a plunger 116 which is sealingly and displaceably received within the chamber 111 of the device 100. The plunger 116 has an outer thread 117 which engages inner thread structures 118 of a container 119. The plunger 116 further has a first actuator 120 and the container 119 forms a second actuator 121 by the outer surface of the container 119. For example the outer surface of the container 119 may have grip structures or may in another example be generally cylindrical. The first and second actuator (120, 121) are adapted for rotating the plunger 116 and the container 119 relative to each other for dispensing the dental substance. The container 119 further forms an outlet tube 123 which has a dispensing outlet 113.

A closure cap 122 is placed over the outlet tube 123, and a dispensing receptacle 112 is formed between the closure cap 122 and the dispensing outlet 113. The closure cap 122 in the example has a blind hole in which the outlet tube 123 is receivable. The space formed by the blind hole between the outlet tube 123 and the closure cap 122 is dimensioned to define a predetermined volume capacity and thus the device 100 shown is adapted to receive a predetermined portion of the dental substance dispensed from the dispensing outlet 113 within the dispensing receptacle 112. In another example instead of a closure cap a ring shaped well which comprises a dispensing receptacle as illustrated in Fig. 1 is provided. Such a well may have an inlet opening for cooperation with the outlet opening 113 of the container 119, a well opening, and an inner surface concavely widening from the inlet opening toward the well opening.

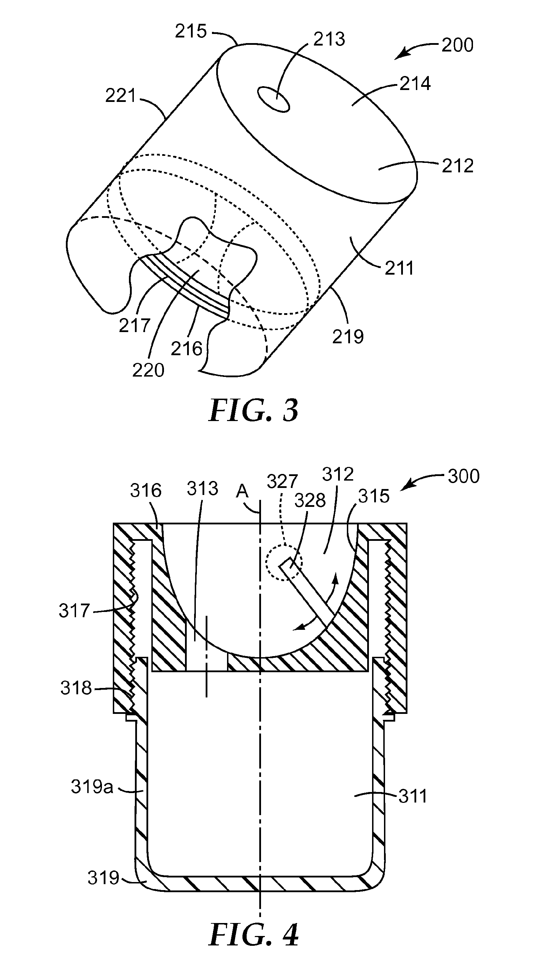

Fig. 3 shows a device 200 for dispensing a dental substance. The device 200 comprises a chamber 211 for containing the dental substance. The device 200 has further a dispensing receptacle 212. The receptacle 212 is configured for presenting the dental substance to a user. The device has dispensing outlet 213 which is an opening of the chamber 211. The dispensing opening 213 opens into the receptacle 212. In the example shown the dispensing opening 213 is provided at a first end of an inner surface 214 of the receptacle 212. Further a receptacle opening 215 is formed at an opposite second end of the inner surface 214 of the receptacle 212. The inner surface 214 of the receptacle 212 concavexly, and preferably smoothly, widens from the dispensing outlet 213 toward the receptacle opening 215. The receptacle opening is larger in cross-section than the dispensing outlet. Preferably the receptacle opening is larger in cross-section than the dispensing outlet. Thus the dental substance dispensed may be accessible easily by a user of the device 200.

The dispensing receptacle 212 is shaped such that it defines a predetermined volume capacity between the dispensing outlet 213 and the receptacle opening 215. Accordingly the dispensing receptacle 212 allows for measuring a predetermined portion of the dental substance dispensed from the dispensing outlet 213. In the example the device 200 has further a plunger 216 which is sealingly and displaceably received within the chamber 211. The plunger 216 is movable within the chamber 211 for reducing the chamber 211 in volume and thereby dispensing dental substance toward the receptacle 212. The plunger 216 has an outer thread 217 which engages inner thread structures (not shown) of a container 219. In the example the container 219 also forms the receptacle 212. The plunger 216 further has a first actuator 220 and the container 219 forms a second actuator 221. The second actuator 221 in the example shown is provided by an outer cylindrical surface of the device 200. The first and second actuator 220, 221 are adapted for rotating the plunger 216 and the container 219 relative to each other. Therefore the device 200 is adapted such that twisting of the plunger 216 and the container 219 relative to each other, for example by a user operating the actuators 220, 221, causes operating the screw mechanism and thereby the chamber volume to reduce. Accordingly the dental substance can be dispensed into the dispensing receptacle 212 by rotating the plunger 216 and the container 219 relative to each other.

The container 219 is shaped such that the receptacle opening 215 extends substantially in a plane and further such that the container 219 at one end is substantially flush with that plane. Therefore the device 200 may be used with a flat structure, for example a table surface, as described above.

Fig. 4 shows a further device 300 in which a chamber 311 is formed by a container 319 of a standard jar. A standard jar, for example as used for dental putty materials, typically consists of a container and a closure cap. The container 319 has adjacent its open end an outer thread 318 (or thread structures) which is typically used for screwing the closure cap onto the container 319 for sealing the dental substance within the container 319. In the example shown the closure cap (not illustrated) is removed from the container 319 and replaced by a plunger 316. In this example the plunger 316 forms a ring shaped groove which is dimensioned to receive the generally cylindrical side wall 319a of the container 319. Further the plunger 316 within the groove has an inner thread which is adapted for engaging with the outer thread 318 of the container 319. Thus a screw mechanism is formed between the plunger 316 and the container 319 allowing for telescopically screwing the plunger 316 into the container 319 for dispensing dental substance from a dispensing outlet 313 formed within the plunger 316. Further the plunger 316 forms a receptacle 312 and a receptacle opening 315. In the example the dispensing outlet 313 is arranged in an off-center relationship of a longitudinal axis A of the device 200, which further corresponds to the rotation axis of the screw mechanism. This has been found to facilitate emptying of the container at minimized residual amount of material in the container. However the person skilled in the art will recognize that the dispensing outlet 313 may be centrically arranged with the longitudinal axis.

The device 300 of the example may have a receptacle 312 which optionally has a concave generally ball shaped inner surface, and a pivotable cutter 328 may be arranged with its rotation axis generally concentric to the ball shape and dimensioned such that the cutting edge of the cutter contacts or substantially contacts the inner surface. Thus a portion of dental substance dispensed from the dispensing opening 313 may be cut by rotating the cutter within the receptacle. For rotating the cutter 328 a rotation knob 327 may be provided at the cutter. The person skilled in the art will recognize other actuation means instead of a knob, for example a lever.

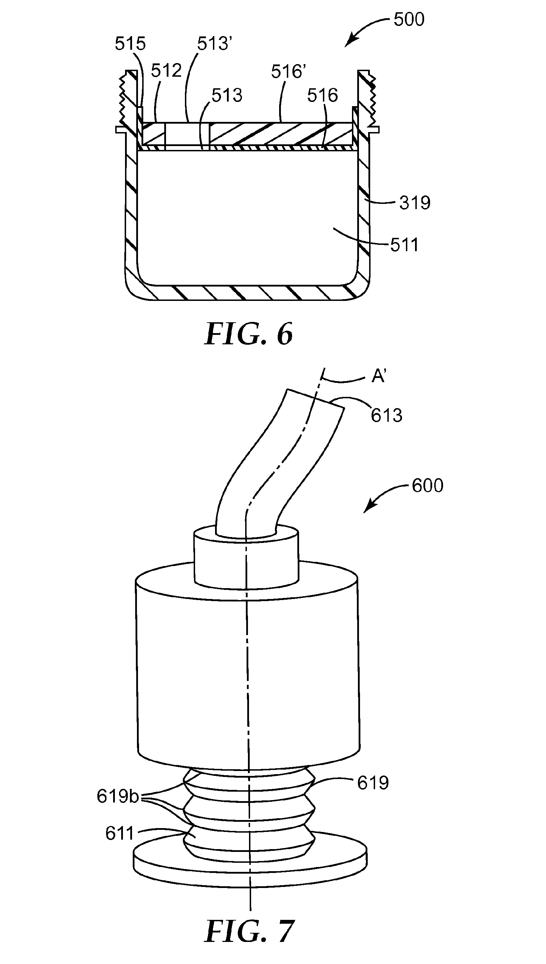

In another example the receptacle may have a rotary slide valve for openably closing the dispensing opening 313 as disclosed in the example shown in Fig. 6.

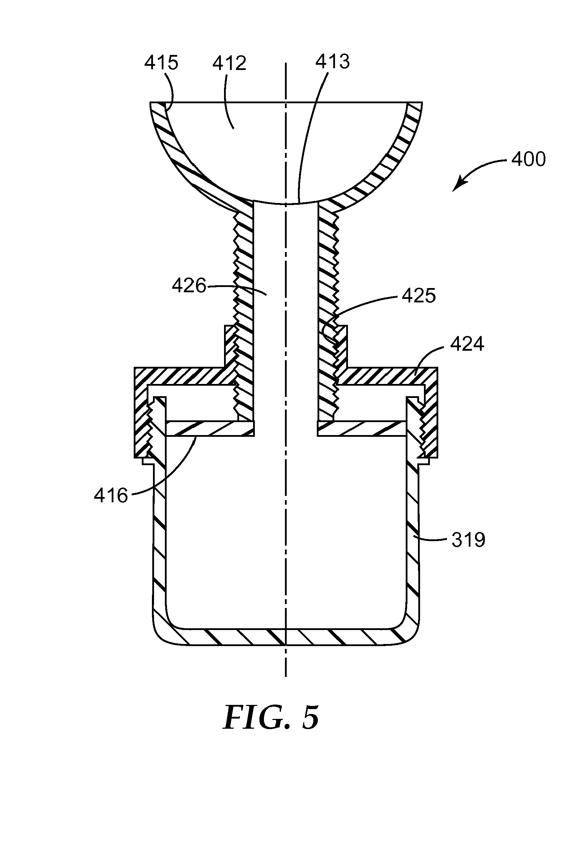

Fig. 5 shows a further device 400 in which a container 319 of a standard jar is used as illustrated in Fig. 4. In this example the closure cap (not shown) of the jar is replaced by a bushing 424 which comprises an inner thread 425. A plunger 416 is arranged within the bushing 242. The plunger 416 has an outer thread 417 which cooperates with the inner thread 425 of the bushing 424, such that a rotation of the bushing 424 and the plunger 416 relative to each other causes the plunger 416 to displace into the container 319. The plunger 416 further has a through hole 426 which connects the chamber with a dispensing outlet 413. Accordingly a displacement of the plunger into the container 319 causes dental substance to be dispensed from the dispensing opening 413. The plunger 416 adjacent the dispensing outlet 413 has an optional receptacle 412 extending between the dispensing outlet 413 and a receptacle outlet 415.

Fig. 6 shows a further device 500 which comprises a container 319 of a standard jar as described above. A plunger 516 is displaceably provided within chamber 511 formed by the container 319 such that a displacement of the plunger 516 into the container 319 causes dental substance contained in the container to be dispensed from a dispensing outlet 513 provided within the plunger 516. For example the plunger 516 may be manually pushed into the container. The dispensing outlet 513 is formed by a through-hole in the plunger 516 connecting the dispensing outlet 513 and the chamber 511. Optionally the device 500 may have a closure 516' which has a further dispensing outlet 513'. The closure 516' and the plunger 516 together may form a rotary slide valve which is rotatable between an open position, in which the dispensing outlets 513, 513' overlap, and a closed position, in which the dispensing outlets 513, 513' do not overlap. Preferably dental substance dispensed outside the chamber 511 can be cut off by rotating the plunger 516 and the closure 516' from the open toward the closed position.

In the example the plunger adjacent the dispensing outlet is minimized in thickness, for example has a thickness of less than about 5 mm, preferably less than about 2 mm. Therefore the through-hole is also minimized in length. Thus residual material within the through-hole of the plunger may be minimized. The plunger 516 may form a dispensing receptacle 512 between the dispensing outlet 513 and a receptacle opening 515.

Fig. 7 shows a device 600 which has a deformable container 619. The container 619 further forms a chamber 611 for holding the dental substance. In the example the device 600 extends generally rotationally symmetrical along a longitudinal axis A' and the container 619 is adapted such that it is collapsible in a dimension along the longitudinal axis A' at predetermined folding lines 619b (harmonica type collapsible container). By collapsing the container 619 the chamber 611 is preferably reduced in volume so that collapsing of the container 619 also causes dental substance to be dispensed from the device. The person skilled in the art will recognize that the device in another example may comprise a collapsible foil bag without predetermined fold lines. The device 600 further has a dispensing outlet 613 for dispensing dental substance from the device 600. A dispensing receptacle (not shown) may be provided adjacent the dispensing outlet 613.

## Claims

1. A device for dispensing a dental substance, comprising a chamber for containing the dental substance, a dispensing receptacle for presenting the dental substance to a user, and a dispensing outlet for the chamber opening into the dispensing receptacle, the dispensing receptacle being shaped to define a predetermined volume capacity between the dispensing outlet and an opening of the receptacle and thus being adapted to receive a predetermined portion of the dental substance dispensed from the dispensing outlet, the device further being adapted such that for dispensing the portion of the dental substance the chamber is reducible in volume.

2. The device of claim 1, in which the receptacle has an inner surface, wherein the inner surface concavely widens from the dispensing outlet toward the receptacle opening, with the receptacle opening being larger in cross-section than the dispensing outlet.

3. The device of claim 1 or 2, further comprising means for limiting an amount of dental substance dispensed within the predetermined volume capacity.

4. The device of claim 3, further comprising at least one from among a closure for closing the opening of the receptacle, and a cutter for cutting off excess dental substance extending outside the receptacle.

5. The device of any of the preceding claims, comprising a container which forms at least part of the chamber, an actuator, and a screw mechanism, wherein the device is adapted such that twisting of the actuator and the container relative to each other causes operating the screw mechanism and thereby the chamber volume to reduce.

6. The device of claim 5, further comprising a plunger receivable or received within the container, wherein the plunger has a first thread forming part of the screw mechanism.

7. The device of claim 6, wherein the container has a second thread optionally forming a further part of the screw mechanism.

8. The device of claim 7, in which the container is part of a jar which further comprises a screw cap for closing the jar, and wherein the device is adapted such that the plunger and the screw cap are alternatively engageable with the container via the second thread.

9. The device of claim 8, in which the second thread is an outer thread and the plunger forms the first thread as inner thread for engaging with the second thread, and wherein the plunger further forms the dispensing receptacle.

10. The device of claim 7, in which the second thread is an inner thread and the plunger forms the first thread as outer thread for engaging with the second thread.

11. The device of claim 10, in which the plunger comprises the actuator and being received with the container, and wherein the plunger is dimensioned such that the actuator is located outside the container at a position at which the chamber volume is essentially zero, or alternatively, dimensioned such that the actuator is located inside the container at essentially any position.

12. The device of claim 8, comprising a further screw cap for screwing on the second thread of the container and forming a third thread for engaging with the first thread of the plunger, and wherein the plunger comprises the dispensing outlet.

13. The device of claim 1 to 5, comprising a spindle and a piston, the spindle and the piston are in screwed connection with each other such that a relative rotation of the spindle and the piston to each other causes a linear displacement of the spindle and the piston to each other, the spindle being received axially stationary but rotatably within the container and the piston being received axially displaceable but anti twist retained within the container, and wherein the actuator is connected with the spindle.

14. The device of any of the preceding claims, having a generally rotationally symmetric shape with the outlet extending parallel and in an off-center relationship to the symmetry axis.

15. The device of any of the preceding claims, containing the dental substance which exhibits a consistency as it is described by ISO 4823 as kneadable or putty or type 0 consistency.
